# EUROPÄISCHE PATENTSCHRIFT

(11) **EP 3 825 189 B1**
(45) Veröffentlichungstag und Bekanntmachung des Hinweises auf die Patenterteilung: **08.06.2022**
(21) Anmeldenummer: 20208668.2
(22) Anmeldetag: 19.11.2020
(51) Int. Cl.: B60R 25/10, B60R 25/102, B60R 25/30, B60R 25/33

(54) **DIEBSTAHLWARNSYSTEM UND DIEBSTAHLWARNVERFAHREN**
THEFT WARNING SYSTEM AND THEFT WARNING METHOD
SYSTÈME ANTIVOL ET PROCÉDÉ ANTIVOL

(30) Priorität: 20.11.2019 DE 102019217921
(43) Veröffentlichungstag der Anmeldung: 26.05.2021
(73) Patentinhaber: VOLKSWAGEN AG, 38440 Wolfsburg (DE)
(72) Erfinder: Ambrosi, Tobias, 38114 Braunschweig (DE)

(56) Entgegenhaltungen:
- DE-A1-102018 002 327
- US-A1- 2017 136 947

## Beschreibung

Die Erfindung betrifft ein Diebstahlwarnsystem und Diebstahlwarnverfahren, die mittels Positionsinformationen eines Fahrzeugs und eines Nutzers des Fahrzeugs frühzeitig einen Diebstahl des Fahrzeugs erkennen.

Bisher sind Diebstahlwarnanlagen bekannt, die an Fahrzeugen angebracht sind und bei einem möglichen Diebstahl ein akustisches Warnsignal erzeugen. Das akustische Warnsignal ist nur in einem bestimmten Umkreis für einen entsprechenden Fahrzeughalter wahrnehmbar. So kann es vorkommen, dass trotz Warnsignal der Fahrzeughalter einen Diebstahl(-versuch) nicht bemerkt. Auch erfährt die Polizei von dem Diebstahl(-versuch) nur, wenn sie durch eine das akustische Warnsignal wahrnehmende Person benachrichtigt wird. Ferner kann eine derartige fahrzeugseitige Diebstahlwarnanlage durch Fahrzeugmanipulation außer Betrieb gesetzt werden.

Aus der US 2017/0136947 A1 sind ein Frühwarn-Verfahren, System und Server bekannt, die auf einer Satellitenortung basieren. Es werden Abstände zwischen einem Beobachter, einem beobachteten Objekt und einem Fahrzeug berechnet. Wenn sich das Fahrzeug mit einer bestimmten Geschwindigkeit bewegt, sich ein Abstand zwischen dem Beobachter und dem beobachteten Objekt innerhalb eines vorbestimmten Kurzabstands befindet und sich ein Abstand zwischen dem Fahrzeug und dem Beobachter sowie dem beobachteten Objekt vergrößert, kann festgestellt werden, dass das Fahrzeug gestohlen sein könnte. Dann wird eine Alarminformation an ein Beobachter-Endgerät gesendet.

Die EP 2 048 046 B1 beschreibt ein Fahrzeugsteuerungssystem mit einem Steuerabschnitt und einem Speicherabschnitt. Der Speicherabschnitt erzeugt und speichert automatisch Verhaltensmusterinformationen eines Nutzers des Fahrzeugs. Dieser Steuerabschnitt steuert eine in einem Fahrzeug installierte Fahrzeugvorrichtung in Übereinstimmung mit einer Positionsbeziehung zwischen einer gegenwärtigen Position eines mobilen Terminals, die durch einen in dem Fahrzeug installierten Empfangsabschnitt empfangen wird, und einem gegenwärtigen Standort des Fahrzeugs, der durch einen Fahrzeugstandortdetektionsabschnitt detektiert wird, und in Übereinstimmung mit den Verhaltensmusterinformationen.

Aus der DE 10 2018 002 327 A1 ist ein Verfahren zur Ermittlung eines Diebstahls eines zu einer Fahrzeugflotte gehörenden Fahrzeuges bekannt. Hierbei wird anhand eines mobilen Endgeräts eines Fahrers des Fahrzeugs eine momentane Position des Fahrers ermittelt. Es wird ein Diebstahl vermutet, wenn anhand eines Vergleiches einer momentanen Position des Fahrzeugs mit einer zeitlich geplanten Position eine Abweichung ermittelt wird, die einen vorgegebenen Entfernungswert überschreitet, wobei eine Position des Fahrers zu dem Fahrzeug einen weiteren vorgegebenen Entfernungswert überschreitet. Bei vermutetem Diebstahl wird eine Diebstahlbenachrichtigung ausgegeben.

In der CN 104 192 094 A wird ein Anti-Diebstahlverfahren beschrieben. Ein fahrzeugseitiges Endgerät lokalisiert eine momentane Position eines Fahrzeugs und sendet eine Frühwarninformation, die die Positionsinformation umfasst, an einen Server. Der leitet die Frühwarninformation an ein tragbares Endgerät. Im Hintergrund des tragbaren Geräts wird eine momentane Position des tragbaren Endgeräts erfasst. Wenn eine momentane Position des tragbaren Endgeräts und die Positionsinformation des fahrzeugseitigen Endgeräts nicht konsistent sind und sich die Positionsinformation des fahrzeugseitigen Endgeräts ändert, gibt das tragbare Endgerät einen Alarm aus.

Aufgabe der vorliegenden Erfindung ist es, ein verbessertes Diebstahlwarnsystem und ein verbessertes Diebstahlwarnverfahren bereitzustellen.

Diese Aufgabe wird durch ein Diebstahlwarnsystem nach Anspruch 1 und ein Verfahren nach Anspruch 10 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der Offenbarung betrifft ein Diebstahlwarnsystem zum Auswerten von Positionsinformationen eines Fahrzeugs und Positionsinformationen einer Vielzahl von Endgeräten, die mit einem Nutzer des Fahrzeugs assoziiert sind. Das Diebstahlwarnsystem weist eine Schaltungsanordnung auf, die eingerichtet ist zum:
- Empfangen der Positionsinformationen des Fahrzeugs und der Positionsinformationen der Vielzahl von Endgeräten;
- Vergleichen der Positionsinformationen des Fahrzeugs und der Positionsinformationen der Vielzahl von Endgeräten; und
- Erzeugen eines Warnsignals, wenn das Fahrzeug einen vorbestimmten Bereich aus einer Vielzahl von vorbestimmten Bereichen verlässt, wobei jeder vorbestimmte Bereich von einer Positionsinformation eines entsprechenden Endgeräts aus der Vielzahl von Endgeräten abhängig ist.

Aus den Positionsinformationen des Fahrzeugs ist ein momentaner Standort des Fahrzeugs ermittelbar. So weist das Fahrzeug entsprechende (Standort-)Erfassungseinrichtung, wie bspw. ein GPS-System, für eine Erfassung des momentanen Standorts des Fahrzeugs auf. Aus den Positionsinformationen des Fahrzeugs kann auch eine Bewegung und somit auch eine Geschwindigkeit des Fahrzeugs erfasst/ermittelt werden.

Entsprechendes gilt auch für die Erfassung von Positionsinformationen der Vielzahl von Endgeräten. So weisen mobile Endgeräte, wie Smartphone, Tablets, mobile Computer (Laptops), tragbare Vorrichtungen (Wearables), (Standort-) Erfassungseinrichtungen auf. Alternativ oder ergänzend kann ein momentaner Standort eines mobilen Endgeräts durch mindestens eines von WLAN-basierter Ortung und GSM-Ortung erfasst werden. Aber auch ein (momentaner) Standort eines Desktop-PCs lässt sich mittels geeigneter Verfahren erfassen.

Ferner sind aus den Positionsinformationen des Fahrzeugs und der Endgeräte Bewegungsinformationen, wie Richtung und Geschwindigkeit, für das Fahrzeug und die Endgeräte ableitbar.

Die vorliegende Offenbarung ist nicht auf ein bestimmtes und auf die hier beschriebenen (Ortungs-)Verfahren zur Erfassung der Standorte der Endgeräte und des Fahrzeugs beschränkt. Es sind auch andere bekannte Ortungsverfahren für Endgeräte als auch Fahrzeuge möglich.

Die Schaltungsanordnung des Diebstahlwarnsystems ist eingerichtet, die obigen Schritte auszuführen. Dafür ist die Schaltungsanordnung entsprechend ausgebildet. So kann die Schaltungsanordnung entsprechende Mittel, z.B. eine Kommunikationseinheit zum Senden und Empfangen von Daten, eine Rechnereinheit zum Vergleichen der Positionsinformationen, eine Signalerzeugungseinheit, etc. Ferner können diese Mittel auch Server umfassen, die insbesondere im Backend vorliegen, also nicht im Fahrzeug.

Das Diebstahlwarnsystem erzeugt das Warnsignal, wenn das Fahrzeug vorbestimmte Bereiche verlässt, wobei jeder vorbestimmte Bereich (der Vielzahl von vorbestimmten Bereichen) von einer Positionsinformation eines entsprechenden Endgeräts aus der Vielzahl von Endgeräten abhängig ist. Insbesondere kann das bedeuten, dass sich das Fahrzeug aus einem der vorbestimmten Bereiche herausbewegt. Mit anderen Worten, das Fahrzeug fährt mit einer vorbestimmten (Mindest-)Geschwindigkeit aus einem der vorbestimmten Bereiche. Damit kann sichergestellt werden, dass kein Alarm erzeugt wird, wenn das Fahrzeug parkt.

Jeder der vorbestimmten Bereiche ist bspw. von einem momentanen Standort eines entsprechenden Endgeräts abhängig.

Jedes Endgerät aus der Vielzahl von Endgeräten ist mit dem Nutzer des Fahrzeugs assoziiert. In der Regel sind es Endgeräte, die dem Nutzer gehören. Es können aber auch Endgeräte von mit dem Nutzer assoziierten Personen sein, wie bspw. Familienangehörige, Freunde, Arbeitskollegen, Bekannte, etc. Es ist auch möglich, dass das Fahrzeug mehrere Nutzer aufweist. Der Nutzer eines Fahrzeugs kann der Eigentümer, Fahrzeughalter, Mieter, etc. des Fahrzeugs sein. Mit anderen Worten, der Nutzer ist von vornherein berechtigt, das Auto zu benutzen.

Wenn das Fahrzeug einen der vorbestimmten Bereiche verlässt, wird das Warnsignal erzeugt. Das Warnsignal gibt also an, dass ein Diebstahl vermutet wird.

Indem die vorbestimmten Bereiche von den Positionsinformationen der Vielzahl von (mit dem Nutzer assoziierten) Endgeräten abhängig sind, ist zuverlässiger feststellbar, ob das Fahrzeug gestohlen wird. So kann es durchaus vorkommen, dass ein Nutzer sein Smartphone auf dem Weg in die Arbeit zuhause vergisst, aber ein Wearable (z.B. Smartwatch) trägt. Dadurch kann die Anzahl der Fehlalarme durch das Diebstahlwarnsystem reduziert werden. Gleichzeitig kann aber ein Diebstahl vergleichsweise früh erkannt werden, indem automatisch erkannt wird, wenn das Fahrzeug einen der vorbestimmten Bereiche verlässt.

Insbesondere wenn das Diebstahlwarnsystem außerhalb des Fahrzeugs angeordnet ist, beispielsweise im Backend als Server ausgebildet ist, weist das Diebstahlwarnsystem ein geringeres Manipulationsrisiko auf. Alternativ kann das Diebstahlwarnsystem auch fahrzeugseitig vorliegen.

In einer Alternative wird kein Warnsignal erzeugt, wenn das Fahrzeug zwar den vorbestimmten Bereich verlässt, aber eine Bewegungsrichtung und eine Geschwindigkeit des Fahrzeugs mit einer Bewegungsrichtung und einer Geschwindigkeit eines der Endgeräte der Vielzahl von Endgeräten im Wesentlichen übereinstimmt. Somit können Ungenauigkeiten in den erfassten und abgerufenen Positionsinformationen des Fahrzeugs und der Endgeräte miteinbezogen werden.

In einer weiteren Alternative soll ferner ein Warnsignal erzeugt werden, wenn eines der Endgeräte in dem Fahrzeug vergessen wird und das Fahrzeug gestohlen wird. Dafür wird ein Wegbewegen/Entfernen des Nutzers vom Fahrzeug automatisch erkannt, wenn sich mindestens eines der ihm zugeordneten Endgeräte vom Fahrzeug örtlich wegbewegt und gleichzeitig ein anderes, demselben Nutzer zugeordnetes Gerät an der Position des Fahrzeuges verbleibt. In diesem Fall, wird das im Fahrzeug verbleibende Gerät temporär aus der Liste der sicheren Geräte entfernt. Alternativ kann der Nutzer des Fahrzeugs das vergessene Endgerät aus der Vielzahl von den mit dem Nutzer assoziierten Endgeräten manuell entfernen. Beispielsweise kann diese Vielzahl von Endgeräten in einer Datenbank hinterlegt sein, die durch den Nutzer über einen entsprechenden Service, z.B. App oder Webapplikation, bearbeitbar ist.

Ferner kann, wenn das Warnsignal vorliegt, die Schaltungsanordnung eingerichtet sein zum:
- Benachrichtigen des Nutzers des Fahrzeugs.

Dabei kann der Nutzer über eines der mit ihm assoziierten Endgeräte benachrichtigt werden. Eine entsprechende Benachrichtigung wird an das entsprechende Endgerät gesendet. Die Benachrichtigung kann bspw. mindestens eines von einer Meldung (SMS, Textnachricht, Email, etc.), einem automatisierten Anruf und ähnliches sein. Insbesondere wenn die Benachrichtigung an alle mit dem Nutzer assoziierten Endgeräte gesendet wird, kann sichergestellt werden, dass der Nutzer oder die mit ihm assoziierten Personen über den vermuteten Diebstahl unterrichtet werden.

In einer Alternative kann die Schaltungsanordnung ferner eingerichtet sein zum:
- Senden des Warnsignals an ein Steuergerät des Fahrzeugs, um fahrzeugseitig eine Diebstahlschutzfunktion auszulösen.

Die Diebstahlschutzfunktion kann bspw. das Auslösen eines fahrzeugseitigen Alarmsignals sein. Dadurch können Passanten auf den vorliegenden Diebstahl des Fahrzeugs aufmerksam gemacht werden.

Ferner ist möglich, dass die Diebstahlschutzfunktion das Fahrzeug in einen vorbestimmten Fahrzeugbetrieb versetzt, in dem nur eine eingeschränkte Fahrgeschwindigkeit möglich ist. Alternativ oder ergänzend kann der vorbestimmte Fahrzeugbetrieb einen Wiederstart nach einem Stopp des Fahrzeugs verhindern. So kann verhindert werden, dass das gestohlene Fahrzeug sich zu weit (von den Endgeräten) entfernt.

In einer Variante kann, wenn das Warnsignal vorliegt, die Schaltungsanordnung ferner eingerichtet sein zum:
- Senden einer Autorisierungsanfrage an den Nutzer des Fahrzeugs;
- Empfangen einer Rückmeldung des Nutzers zur Autorisierungsanfrage; und
- Senden eines Autorisierungssignals oder eines Diebstahlschutzsignals an ein Steuergerät des Fahrzeugs auf Basis der Rückmeldung des Nutzers, wobei das Autorisierungssignal eine fahrzeugseitige Autorisierte-Fahrt-Funktion auslöst und das Diebstahlschutzsignal eine fahrzeugseitige Diebstahlschutzfunktion auslöst.

Dabei kann die Autorisierungsanfrage an eines der Endgeräte des Nutzers gesendet werden. Insbesondere können diese Endgeräte dafür eingerichtet sein, die Autorisierungsanfrage durch eine App oder Benachrichtigung, z.B. SMS, zu empfangen.

Ist die Rückmeldung auf die Autorisierungsanfrage positiv, also stimmt der Nutzer der Fahrt des Fahrzeugs zu, wird das Autorisierungssignal gesendet. Das Autorisierungssignal ermöglicht eine autorisierte Fahrt, d.h. es liegt kein Diebstahl des Fahrzeugs vor. Ist die Rückmeldung auf die Autorisierungsanfrage negativ, also der Nutzer genehmigt die Fahrt nicht, so wird das Diebstahlschutzsignal gesendet, dass fahrzeugseitig die Diebstahlschutzfunktion auslöst. Das Diebstahlschutzsignal kann also dem obigen Warnsignal entsprechen.

Zusätzlich oder mit der Autorisierungsanfrage kann über entsprechende Mittel im Fahrzeug eine Sprachverbindung zum Fahrzeug aufgebaut werden, damit der Nutzer den derzeitigen Fahrer kontaktieren kann. Dies kann beispielsweise derart erfolgen, dass ein die Autorisierungsanfrage empfangendes Endgerät des Nutzers die Sprachverbindung zum Fahrzeug aufbaut. Möglich ist auch, wenn im Innenraum des Fahrzeugs eine Beobachtungskamera installiert ist, dass der Nutzer über eines seiner Endgeräte, insbesondere das die Autorisierungsanfrage empfangende Endgerät, eine Verbindung zu der Beobachtungskamera aufbaut. Durch diese zusätzlichen Möglichkeiten kann der Nutzer für sich feststellen, ob der derzeitige Fahrer für die momentane Fahrzeugnutzung berechtigt ist. Der Nutzer kann den derzeitigen Fahrer nachträglich zur Fahrt berechtigen oder eine der weiteren (oben beschriebenen) Diebstahlschutzfunktionen ausführen lassen.

Ferner kann, wenn keine Rückmeldung zurückkommt, angenommen werden, dass der Nutzer des Fahrzeugs die Fahrt nicht autorisiert. Entsprechend kann auch das Diebstahlschutzsignal gesendet werden.

Durch die Autorisierungsanfrage kann der Nutzer, dessen Fahrzeug die vorbestimmten Bereiche verlässt, darüber entscheiden, ob eine Fahrt des Fahrzeugs ohne sein Beisein autorisiert ist. Damit wird die Anzahl der Fehlalarme reduziert.

Ferner können die Positionsinformationen der Vielzahl von Endgeräten mindestens eines von vergangenen Standorten und momentanen Standorten der Vielzahl von Endgeräten umfassen. Damit kann eine Standorthistorie der Endgeräte ermittelt werden, so dass wahrscheinliche Aufenthaltsorte des Nutzers ableitbar sind. Die vorbestimmten Standorte können dann abhängig von wahrscheinlichen Standorten des Nutzers/der Endgeräte abhängig sein. Damit kann das Diebstahlwarnsystem benutzerspezifisch angepasst werden.

In einer Alternative können die vorbestimmten Bereiche (der Vielzahl von vorbestimmten Bereichen) ferner mindestens eines von zeit-, tages- und ortsabhängig sein. Insbesondere die Form und/oder Größe der vorbestimmten Bereiche sind dadurch variabel. Wenn der vorbestimmte Bereich z.B. eine Kreisfläche ist, kann ein Radius des Kreises größer oder kleiner sein, je nach Zeit, Tag und/oder Ort.

Ferner kann das Empfangen und das Vergleichen der Positionsinformationen des Fahrzeugs und der Positionsinformationen der Vielzahl von Endgeräten in vorbestimmten Zeitabständen erfolgen. Ferner können die vorbestimmten Zeitabstände insbesondere mindestens eines von zeit-, tages- und ortsabhängig sein. So kann eine Wahrscheinlichkeit des Diebstahls, die wiederum selbst abhängig von Zeit, Tag und Ort ist, berücksichtigt werden. Wenn eine Wahrscheinlichkeit des Diebstahls niedriger ist, kann der vorbestimmte Zeitabstand höher sein, so dass das Diebstahlsystem weniger Rechenleistung aufwenden muss.

Ferner können die vorbestimmten Bereiche Teile eines Gesamtbereichs sein und der Gesamtbereich abhängig von den Positionsinformationen der Vielzahl von Endgeräten. Beispielsweise können sich zwei Endgeräte an zwei verschiedenen Standorten befinden. Hierbei können die zwei (von diesen zwei Endgeräten abhängigen) vorbestimmten Bereiche nicht überlappend vorliegen. So kann ein weiterer vorbestimmter Bereich, bspw. in Form eines Korridors, die zwei vorbestimmen Bereiche miteinander verbinden. Der weitere vorbestimmte Bereich ist also ein Verbindungsabschnitt. Der Korridor und die zwei vorbestimmten Bereiche bilden dann den Gesamtbereich, in dem sich das Fahrzeug befinden darf, ohne das ein Diebstahlalarm ausgelöst wird. Dadurch wird eine Überfahrt des Fahrzeugs von einem Endgerätstandort zu einem anderen Endgerätstandort nicht als Diebstahl vermutet.

In einer Alternative können die Endgeräte der Vielzahl von Endgeräten eines von einer tragbaren Vorrichtung (Wearables), einem mobilen Endgerät und einem Desktop-Computer sein.

Ein zweiter Aspekt der Offenbarung betrifft ein Verfahren zum Auswerten von Positionsinformationen eines Fahrzeugs und Positionsinformationen einer Vielzahl von mit einem Nutzer des Fahrzeugs assoziierten Endgeräten. Das Verfahren umfasst:
- Abrufen der Positionsinformationen des Fahrzeugs und der Positionsinformationen der Vielzahl von Endgeräten;
- Vergleichen der Positionsinformationen des Fahrzeugs und der Positionsinformationen der Vielzahl von Endgeräten; und
- Erzeugen eines Warnsignals, wenn das Fahrzeug einen vorbestimmten Bereich aus einer Vielzahl von vorbestimmten Bereichen verlässt, wobei jeder vorbestimmte Bereich (aus der Vielzahl von vorbestimmten Bereichen) von einer Positionsinformation eines entsprechenden Endgeräts aus der Vielzahl von Endgeräten abhängig ist.

Ausführungsbeispiele der Erfindung werden nun beispielhaft und unter Bezugnahme auf die beigefügte Zeichnung beschrieben. Dabei zeigt:
- Fig. 1: schematisch ein Diebstahlwarnsystem in Interaktion mit einem Fahrzeug und Endgeräten;
- Fig. 2: schematisch ein Diebstahlwarnverfahren; und
- Fig. 3: schematisch einen Gesamtbereich mit vorbestimmten Bereichen.

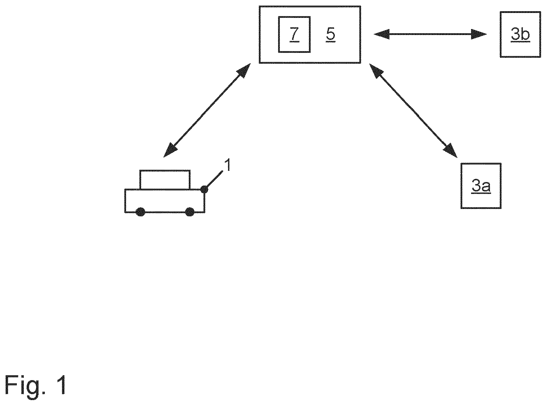

In der Figur 1 ist ein Fahrzeug 1 gezeigt, dass eine (nicht dargestellte) Standorterfassungseinrichtung aufweist. Mittels der Standorterfassungseinrichtung werden Positionsinformationen, u.a. ein momentaner Standort, des Fahrzeugs 1 ermittelt. Ferner weist das Fahrzeug (nicht dargestellte) Kommunikationsmittel auf, um mit einem Diebstahlwarnsystem 5 zu kommunizieren. So sind die Positionsinformationen des Fahrzeugs an das Diebstahlwarnsystem 5 übermittelbar. Das Diebstahlwarnsystem 5 ist in einem Backend angeordnet und kann bspw. ein Server sein.

Ferner ist in Figur 1 eine Vielzahl von Endgeräten 3a, 3b dargestellt. Es versteht sich, dass die Vielzahl von Endgeräten auch mehr als die zwei dargestellten Endgeräte 3a, 3b aufweisen kann. Die Vielzahl von Endgeräten 3a, 3b ist mit einem Nutzer des Fahrzeugs 1 assoziiert. Diese Assoziierungsinformationen können in dem Diebstahlwarnsystem 5, insbesondere in einer (nicht dargestellten) Datenbank, hinterlegt sein.

Positionsinformationen jedes der Endgeräte 3a, 3b sind bspw. über (nicht dargestellte) endgeräteseitige Standorterfassungseinrichtung erfassbar und über (nicht dargestellte) endgeräteseitige Kommunikationsmittel an das Diebstahlwarnsystem 5 übermittelt werden. Alternativ oder ergänzend dazu, kann das Diebstahlwarnsystem 5 mittels bekannter Ortungsverfahren jedes der Endgeräte 3a, 3b orten.

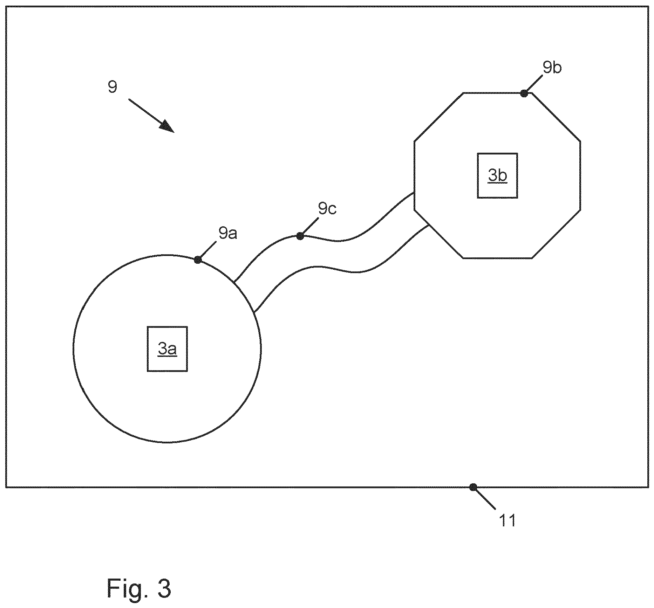

Das Diebstahlwarnsystem 5 weist eine Schaltordnung auf, die ausgebildet und eingerichtet ist, um u.a. die Positionsinformationen des Fahrzeugs 1 und die Positionsinformationen der Vielzahl von Endgeräten 3a, 3b zu empfangen und zu vergleichen. Ferner ist die Schaltanordnung ausgebildet und eingerichtet, anhand des Vergleiches der Positionsinformationen des Fahrzeugs 1 und der Vielzahl von Endgeräten 3a, 3b festzustellen, ob das Fahrzeug 1 einen vorbestimmten Bereich aus einer Vielzahl von vorbestimmten Bereichen 9a, 9b, 9c verlässt. Die Vielzahl von vorbestimmten Bereichen 9a, 9b, 9c ist in Figur 3 dargestellt. Jeder vorbestimmte Bereich 9a, 9b, 9c ist abhängig von einer Positionsinformation eines entsprechenden Endgeräts aus der Vielzahl von Endgeräten 3a, 3b.

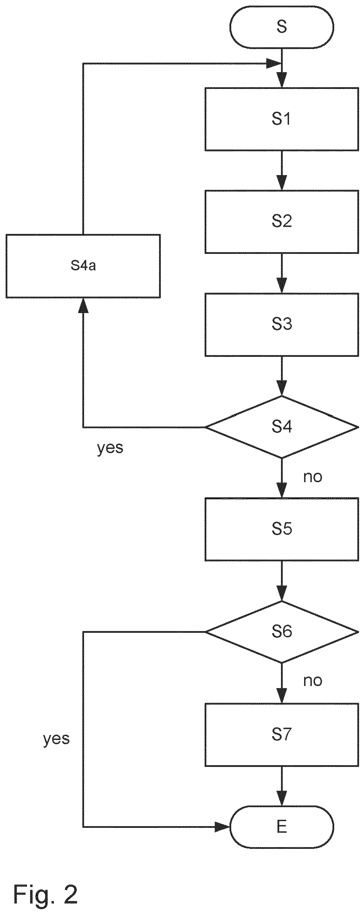

In Figur 2 ist ein Diebstahlwarnverfahren dargestellt. Das Verfahren kann bspw. durch das Diebstahlwarnsystem 5 ausgeführt werden.

Im Schritt S1 werden die Positionsinformationen des Fahrzeugs 1 empfangen und/oder abgerufen.

Im Schritt S2 werden die Positionsinformationen der Vielzahl von Endgeräten 3a, 3b empfangen und/oder abgerufen. Die Schritte S1 und S2 können auch vertauscht werden.

Im Schritt S3 wird die Vielzahl von vorbestimmten Bereichen 9a, 9b, 9c abgerufen, in denen sich das Fahrzeug 1 befinden darf. Die Positionsinformationen des Fahrzeugs 1 und der Vielzahl von Endgeräten 3a, 3b sowie die Vielzahl von vorbestimmten Bereichen 9a, 9b, 9c können in der Datenbank des Diebstahlwarnsystems 5 hinterlegt/abgespeichert sein. Die Vielzahl von vorbestimmten Bereichen 9a, 9b, 9c ist von den Positionsinformationen der Vielzahl von Endgeräten 3a, 3b abhängig.

Im Schritt S4 wird geprüft, ob sich das Fahrzeug 1 in einem der vorbestimmten Bereiche 9a, 9b, 9c befindet. Falls ja, geht es weiter zu Schritt S4a. Im Schritt S4a wird eine vorbestimmte Zeit abgewartet, bevor das Verfahren mit Schritt S1 fortfährt. Die vorbestimmte Zeit ist beliebig und kann insbesondere mindestens mehrere Minuten betragen. Alternativ zum Abwarten der vorbestimmten Zeit kann von Schritt S4a zu Schritt S1 übergegangen werden, wenn das Diebstahlsystem 5 ein Ereignis erfasst, wie z.B. eine Bewegung das Fahrzeugs 1 nach einem Parken des Fahrzeugs 1.

Falls aus der Prüfung im Schritt S4 hervorgeht, dass das Fahrzeug 1 einen der vorbestimmten Bereiche 9a, 9b, 9c verlässt, wird ein Warnsignal erzeugt. Alternativ oder ergänzend kann das Warnsignal erst erzeugt werden, wenn die Prüfung die Schritte S1 bis S4 mehrmals hintereinander durchgeführt werden und ergeben, dass das Fahrzeug 1 einen der vorbestimmten Bereiche 9a, 9b, 9c verlässt. Somit kann die Fehleranfälligkeit des Diebstahlssystems 5 verringert werden.

In Reaktion auf das Warnsignal wird im Schritt S5 eine Autorisierungsanfrage an den Nutzer des Fahrzeugs 1 versendet. In der Autorisierungsanfrage wird abgefragt, ob der Nutzer dem derzeitigen Fahrer des Fahrzeugs 1 die Fahrt (außerhalb der vorbestimmten Bereiche 9a, 9b, 9c) erlauben möchte. Für den Fall, dass mehrere Nutzer für das Fahrzeug 1 vorliegen, kann die Autorisierungsanfrage im Schritt S5 an alle Nutzer versendet werden. Zusätzlich zu der Autorisierungsanfrage an den Nutzer kann im Schritt S5 über entsprechende Mittel im Fahrzeug 1 eine Sprachverbindung ins Fahrzeug 1 aufgebaut werden, um den derzeitigen Fahrer zu kontaktieren. Möglich ist auch, wenn im Innenraum des Fahrzeugs 1 eine Beobachtungskamera installiert ist, eine Verbindung zu dieser aufzubauen. Durch diese zusätzlichen Möglichkeiten kann der Nutzer feststellen, ob der derzeitige Fahrer für die Fahrzeugnutzung berechtigt ist.

Der Schritt S5 ist optional und das Verfahren kann nach Schritt S4 gleich zu Schritt S6 springen.

Im Schritt S6 wird die Rückmeldung des Nutzers zur Autorisierungsanfrage empfangen und ausgewertet. Liegt eine Autorisierung durch den Nutzer des Fahrzeugs 1 vor, also genehmigt der Nutzer die Fahrt, wird das Diebstahlwarnverfahren beendet. Es wird ein Autorisierungssignal an ein (nicht dargestelltes) Steuergerät des Fahrzeugs 1 gesendet, wodurch eine fahrzeugseitige Autorisierte-Fahrt-Funktion ausgelöst wird. Der momentane Fahrer darf also das Fahrzeug 1 bis zu einem vorbestimmten Ereignis oder für eine vorbestimmte Dauer nutzen. Das vorbestimmte Ereignis kann bspw. das Abstellen des Fahrzeugs, insbesondere an einem vorbestimmten Ort, sein. Im Fall, dass mehrere Nutzer für das Fahrzeug 1 vorliegen, kann auch die Genehmigung einer der mehreren Nutzer ausreichen.

Wird im Schritt S6 festgestellt, dass keine Autorisierung vorliegt, wird ein Diebstahlschutzsignal an das (nicht dargestellte) Steuergerät des Fahrzeugs 1 gesendet, so dass im Schritt S7 eine fahrzeugseitige Diebstahlschutzfunktion ausgeführt wird.

In einer Alternative kann das in Schritt S4 erzeugte Warnsignal an das fahrzeugseitige Steuergerät gesendet werden, so dass in Reaktion auf das Warnsignal, das angibt, dass das Fahrzeug einen der vorbestimmten Bereiche 9a, 9b, 9c verlässt, ebenfalls Schritt S7 ausgeführt wird.

In Figur 3 ist beispielhaft und schematisch eine Landkartenansicht 11 dargestellt, die einen Gesamtbereich 9 zeigt, in dem sich das Fahrzeug 1 befinden kann, ohne dass ein Diebstahl vermutet wird. Hier sind vorbestimmte Bereiche 9a und 9b dargestellt, die einer Zone um die Endgeräte 3a bzw. 3b entsprechen. Wenn sich die Endgeräte 3a und 3b bewegen, verschieben sich die vorbestimmten Bereiche 9a bzw. 9b entsprechend mit.

Die vorbestimmten Bereiche 9a und 9b sind hier kreis- bzw. achteckförmig ausgebildet. Diese Formen sind lediglich beispielhaft und können je nach Bedürfnis angepasst werden. So können die vorbestimmten Bereiche 9a, 9b, insbesondere deren Form, eine Vielzahl von Formen aufweisen. Insbesondere können die vorbestimmten Bereiche auch tages-, zeit- und ortsabhängig sein oder auch nutzerspezifisch angepasst sein. Der Gesamtbereich 9 kann ferner einen Verbindungsabschnitt 9c aufweisen, der die beiden vorbestimmten Bereiche 9a, 9b miteinander verbindet. Der Verbindungsabschnitt 9c ist also ein Korridor, der entsprechende Fahrrouten aufweist, die das Fahrzeug 1 von einem der Endgeräte 3a, 3b zu dem anderen führen. Wenn sich das Fahrzeug 1 in dem Korridor 9c befindet, wird vermutet, dass sich das Fahrzeug 1 lediglich auf einer Überfahrt von einem der Endgeräte 3a, 3b zu dem anderen befindet. Entsprechend wird kein Diebstahl angenommen.

Die vorbestimmten Bereiche 9a, 9b und der Verbindungsabschnitt 9c bilden den Gesamtbereich 9. Der Gesamtbereich 9, insbesondere die vorbestimmten Bereiche 9a, 9b und der Verbindungsabschnitt 9c bilden eine gedachte Begrenzung auf einer Erdoberfläche (oder in der Luft).

### Bezugszeichenliste

- 1: Fahrzeug
- 3a, 3b: Endgeräte
- 5: Diebstahlwarnsystem
- 7: Schaltungsanordnung
- 9: Gesamtbereich
- 9a, 9b: vorbestimmte Bereiche
- 9c: weiterer vorbestimmter Bereich/Verbindungsabschnitt/Korridor
- S1-S7: Verfahrensschritte

## Patentansprüche

1. Diebstahlwarnsystem zum Auswerten von Positionsinformationen eines Fahrzeugs (1) und Positionsinformationen einer Vielzahl von mit einem Nutzer des Fahrzeugs assoziierten Endgeräten (3a, 3b), wobei das Diebstahlwarnsystem (5) eine Schaltungsanordnung (7) aufweist, die eingerichtet ist zum:
- (S1) Empfangen der Positionsinformationen des Fahrzeugs (1) und (S2) Empfangen der Positionsinformationen der Vielzahl von Endgeräten (3a, 3b);
- (S4) Vergleichen der Positionsinformationen des Fahrzeugs (1) und der Positionsinformationen der Vielzahl von Endgeräten (3a, 3b); und
- (S4) Erzeugen eines Warnsignals, wenn das Fahrzeug (1) einen vorbestimmten Bereich aus einer Vielzahl von vorbestimmten Bereichen (9a, 9b, 9c) verlässt, wobei jeder vorbestimmte Bereich von einer Positionsinformation eines entsprechenden Endgeräts (3a, 3b) aus der Vielzahl von Endgeräten (3a, 3b) abhängig ist.

2. Diebstahlwarnsystem nach Anspruch 1, wobei, wenn das Warnsignal vorliegt, die Schaltungsanordnung (7) ferner eingerichtet ist zum:
- (S5) Benachrichtigen des Nutzers des Fahrzeugs (1).

3. Diebstahlwarnsystem nach einem der vorherigen Ansprüche, wobei die Schaltungsanordnung (7) ferner eingerichtet ist zum:
- (S7) Senden des Warnsignals an ein Steuergerät des Fahrzeugs (1), um fahrzeugseitig eine Diebstahlschutzfunktion auszulösen.

4. Diebstahlwarnsystem nach Anspruch 1 oder 2, wobei, wenn das Warnsignal vorliegt, die Schaltungsanordnung (7) ferner eingerichtet ist zum:
- (S5) Senden einer Autorisierungsanfrage an den Nutzer des Fahrzeugs (1);
- (S6) Empfangen einer Rückmeldung des Nutzers zur Autorisierungsanfrage; und
- (S6) Senden eines Autorisierungssignals oder eines Diebstahlschutzsignals an ein Steuergerät des Fahrzeugs (1) auf Basis der Rückmeldung des Nutzers, wobei das Autorisierungssignal eine fahrzeugseitige Autorisierte-Fahrt-Funktion auslöst und das Diebstahlschutzsignal eine fahrzeugseitige Diebstahlschutzfunktion auslöst.

5. Diebstahlwarnsystem nach einem der vorherigen Ansprüche, wobei die Positionsinformationen der Vielzahl von Endgeräten (3a, 3b) mindestens eines von vergangenen Standorten und momentanen Standorten der Vielzahl von Endgeräten umfassen.

6. Diebstahlwarnsystem nach einem der vorherigen Ansprüche, wobei die vorbestimmten Bereiche (9a, 9b, 9c) ferner mindestens eines von zeit-, tages- und ortsabhängig sind.

7. Diebstahlwarnsystem nach einem der vorherigen Ansprüche, wobei das (S1, S2) Empfangen und (S4) Vergleichen der Positionsinformationen des Fahrzeugs (1) und der Positionsinformationen der Vielzahl von Endgeräten (3a, 3b) in vorbestimmten Zeitabständen erfolgt, wobei die vorbestimmten Zeitabstände insbesondere mindestens eines von zeit-, tages- und ortsabhängig sind.

8. Diebstahlwarnsystem nach einem der vorherigen Ansprüche, wobei die Vielzahl von vorbestimmten Bereichen (9a, 9b, 9c) Teile eines Gesamtbereichs (9) sind und der Gesamtbereich (9) von Positionsinformationen der Vielzahl von Endgeräten (3a, 3b) abhängig ist.

9. Diebstahlwarnsystem nach einem der vorherigen Ansprüche, wobei Endgeräte der Vielzahl von Endgeräten (3a, 3b) mindestens eines von einer tragbaren Vorrichtung, einem mobilen Endgerät und einem Desktop-Computer umfassen.

10. Verfahren zum Auswerten von Positionsinformationen eines Fahrzeugs (1) und Positionsinformationen einer Vielzahl von mit einem Nutzer des Fahrzeugs assoziierten Endgeräten (3a, 3b), wobei das Verfahren aufweist:
- Abrufen der Positionsinformationen des Fahrzeugs (1) und der Positionsinformationen der Vielzahl von Endgeräten (3a, 3b);
- Vergleichen der Positionsinformationen des Fahrzeugs (1) und der Positionsinformationen der Vielzahl von Endgeräten (3a, 3b); und
- Erzeugen eines Warnsignals, wenn das Fahrzeug (1) einen vorbestimmten Bereich aus einer Vielzahl von vorbestimmten Bereichen (9a, 9b, 9c) verlässt, wobei jeder vorbestimmte Bereich (9a, 9b, 9c) von einer Positionsinformation eines entsprechenden Endgeräts (3a, 3b) aus der Vielzahl von Endgeräten (3a, 3b) abhängig ist.

## Claims

1. A theft warning system for evaluating position information of a vehicle (1) and position information of a plurality of terminal devices (3a, 3b) associated with a user of the vehicle, wherein the theft warning system (5) comprises a circuit arrangement (7) configured to:
- (S1) receive the position information of the vehicle (1) and (S2) receive the position information of the plurality of terminal devices (3a, 3b);
- (S4) compare the position information of the vehicle (1) and the position information of the plurality of terminal devices (3a, 3b); and
- (S4) generate a warning signal when the vehicle (1) leaves one prespecified region of a plurality of prespecified regions (9a, 9b, 9c), wherein each prespecified region is dependent on position information of one corresponding terminal device (3a, 3b) of the plurality of terminal devices (3a, 3b).

2. The theft warning system according to Claim 1, wherein, when the warning signal is present, the circuit arrangement (7) is further configured to:
- (S5) notify the user of the vehicle (1).

3. The theft warning system according to any one of the preceding claims, wherein the circuit arrangement (7) is further configured to:
- (S7) send the warning signal to a control device of the vehicle (1) in order to trigger an on-board anti-theft protection function.

4. The theft warning system according to Claims 1 or 2, wherein, when the warning signal is present, the circuit arrangement (7) is further configured to:
- (S5) send an authorization request to the user of the vehicle (1);
- (S6) receive from the user an acknowledgment of the authorization request; and
- (S6) send an authorization signal or an anti-theft protection signal to a control device of the vehicle (1) on the basis of the user's acknowledgment, wherein the authorization signal triggers an on-board authorized-driving function and triggers an on-board anti-theft protection function.

5. The theft warning system according to any one of the preceding claims, wherein the position information of the plurality of terminal devices (3a, 3b) comprises at least one of the past locations and current locations of the plurality of terminal devices.

6. The theft warning system according to any one of the preceding claims, wherein the prespecified regions (9a, 9b, 9c) are further dependent on at least one of time of day, day of the week, and location.

7. The theft warning system according to any one of the preceding claims, wherein the (S1, S2) reception and (S4) comparison of the position information of the vehicle (1) and of the position information of the plurality of terminal devices (3a, 3b) takes place at prespecified time intervals, wherein the prespecified time intervals are in particular dependent on at least one of time of day, day of the week, and location.

8. The theft warning system according to any one of the preceding claims, wherein the plurality of prespecified regions (9a, 9b, 9c) are parts of a total region (9) and the total region (9) is dependent on position information of the plurality of terminal devices (3a, 3b).

9. The theft warning system according to any one of the preceding claims, wherein terminal devices of the plurality of terminal devices (3a, 3b) comprise at least one of a portable device, a mobile terminal device, and a desktop computer.

10. A method for evaluating position information of a vehicle (1) and position information of a plurality of terminal devices (3a, 3b) associated with a user of the vehicle, wherein the method comprises:
- retrieving the position information of the vehicle (1) and the position information of the plurality of terminal devices (3a, 3b);
- comparing the position information of the vehicle (1) and the position information of the plurality of terminal devices (3a, 3b); and
- generating a warning signal when the vehicle (1) leaves a prespecified region of a plurality of prespecified regions (9a, 9b, 9c), wherein each prespecified region (9a, 9b, 9c) is dependent on position information of a corresponding terminal device (3a, 3b) from the plurality of terminal devices (3a, 3b).

## Revendications

1. Système d'alarme anti-vol pour l'évaluation d'informations de position d'un véhicule (1) et d'informations de position d'une pluralité de dispositifs terminaux (3a, 3b) associés à un utilisateur du véhicule, le système d'alarme anti-vol (5) présentant un agencement de circuit (7), qui est configuré pour :
- (S1) la réception des informations de position du véhicule (1) et (S2) la réception des informations de position de la pluralité de dispositifs terminaux (3a, 3b) ;
- (S4) la comparaison des informations de position du véhicule (1) et des informations de position de la pluralité de dispositifs terminaux (3a, 3b) ; et
- (S4) la génération d'un signal d'alarme, lorsque le véhicule (1) quitte une zone prédéfinie d'une pluralité de zones prédéfinies (9a, 9b, 9c), chaque zone prédéfinie étant dépendante d'une information de position d'un dispositif terminal (3a, 3b) correspondant de la pluralité de dispositifs terminaux (3a, 3b).

2. Système d'alarme anti-vol selon la revendication 1, l'agencement de circuit (7) étant en outre, lorsque le signal d'alarme est présent, configuré pour :
- (S5) la notification de l'utilisateur du véhicule (1).

3. Système d'alarme anti-vol selon l'une quelconque des revendications précédentes, l'agencement de circuit (7) étant en outre configuré pour :
- (S7) la transmission du signal d'alarme à un appareil de commande du véhicule (1), pour déclencher une fonction de protection anti-vol côté véhicule.

4. Système d'alarme anti-vol selon la revendication 1 ou 2, l'agencement de circuit (7) étant en outre, lorsque le signal d'alarme est présent, configuré pour :
- (S5) la transmission d'une demande d'autorisation à l'utilisateur du véhicule (1) ;
- (S6) la réception d'une réponse de l'utilisateur à la demande d'autorisation ; et
- (S7) la transmission d'un signal d'autorisation ou d'un signal de protection anti-vol à un appareil de commande du véhicule (1) sur la base de la réponse de l'utilisateur, le signal d'autorisation déclenchant une fonction de conduite autorisée côté véhicule et le signal de protection anti-vol déclenchant une fonction de protection anti-vol côté véhicule.

5. Système d'alarme anti-vol selon l'une quelconque des revendications précédentes, les informations de position de la pluralité de dispositifs terminaux (3a, 3b) comprenant au moins un d'emplacements passés et d'emplacements actuels de la pluralité de dispositifs terminaux.

6. Système d'alarme anti-vol selon l'une quelconque des revendications précédentes, les zones prédéfinies (9a, 9b, 9c) étant en outre au moins dépendantes d'un élément parmi l'heure, le jour et le lieu.

7. Système d'alarme anti-vol selon l'une quelconque des revendications précédentes, la (S1, S2) réception et la (S4) comparaison des informations de position du véhicule (1) et des informations de position de la pluralité de dispositifs terminaux (3a, 3b) étant effectuées à intervalles de temps prédéfinis, les intervalles de temps prédéfinis étant en particulier au moins dépendants d'un élément parmi l'heure, le jour et le lieu.

8. Système d'alarme anti-vol selon l'une quelconque des revendications précédentes, la pluralité de zones prédéfinies (9a, 9b, 9c) étant des parties d'une zone entière (9) et la zone entière (9) étant dépendante des informations de position de la pluralité de dispositifs terminaux (3a, 3b).

9. Système d'alarme anti-vol selon l'une quelconque des revendications précédentes, des dispositifs terminaux de la pluralité de dispositifs terminaux (3a, 3b) comprenant au moins un parmi un dispositif portable, un dispositif terminal mobile et un ordinateur de bureau.

10. Procédé pour l'évaluation d'informations de position d'un véhicule (1) et d'informations de position d'une pluralité de dispositifs terminaux (3a, 3b) associés à un utilisateur du véhicule, le procédé présentant :
- la récupération des informations de position du véhicule (1) et des informations de position de la pluralité de dispositifs terminaux (3a, 3b) ;
- la comparaison des informations de position du véhicule (1) et des informations de position de la pluralité de dispositifs terminaux (3a, 3b) ; et
- la génération d'un signal d'alarme, lorsque le véhicule (1) quitte une zone prédéfinie d'une pluralité de zones prédéfinies (9a, 9b, 9c), chaque zone prédéfinie (9a, 9b, 9c) étant dépendante d'une information de position d'un dispositif terminal (3a, 3b) correspondant de la pluralité de dispositifs terminaux (3a, 3b).
